# EUROPÄISCHE PATENTSCHRIFT

(11) **EP 0 676 376 B1**
(45) Veröffentlichungstag und Bekanntmachung des Hinweises auf die Patenterteilung: **10.03.1999**
(21) Anmeldenummer: 95104571.5
(22) Anmeldetag: 28.03.1995
(51) Int. Cl.: C03B 9/38, C03B 9/453, C03B 9/16

(54) **Vorrichtung zur Kühlung und zum Abtransport von Hohlglasartikeln**
Apparatus for cooling and for transporting away hollow glass ware
Appareil de refroidissement et de déportation des objets creux en verre

(30) Priorität: 07.04.1994 DE 4411965
(43) Veröffentlichungstag der Anmeldung: 11.10.1995
(73) Patentinhaber: GPS GLASPRODUKTIONS-SERVICE GMBH, 45329 Essen (DE)
(72) Erfinder: Krämer, Kurt, D-45329 Essen (DE); Heinz, Ulrich, D-45721 Haltern (DE)
(74) Vertreter: Spalthoff, Adolf, Dipl.-Ing.

(56) Entgegenhaltungen:
- EP-A- 0 037 799
- EP-A- 0 153 801
- FR-A- 2 193 792

## Beschreibung

Die Erfindung bezieht sich auf eine Vorrichtung zur Kühlung und zum Abtransport von Hohlglasartikeln nach dem Oberbegriff des Patentanspruchs 1.

Die noch heißen Hohlglasartikel werden von der Fertigungsmaschine über die Abstellplatte auf das auf dem Bandträger laufende Transportband übergeschoben. Aufgrund der Relativbewegung zwischen dem Transportband und dem Bandträger tritt zwischen beiden Verschleiß auf, so daß sich im Laufe der Zeit das Transportband absenkt und sich somit eine Stufe zwischen der Abstellplatte und der Oberseite des Transportbandes bildet.

Um derartige Verschleißerscheinungen möglichst schnell ausgleichen zu können, ist es aus dem praktischen Betrieb bekannt, auf den Bandträger sog. Verschleißplatten aufzubringen, auf denen das Transportband läuft und die dann von Zeit zu Zeit ausgewechselt werden können.

Dennoch verbleibt jedoch die Problematik, daß die Oberseite der Abstellplatte der Kühlbox und die Oberseite des Bandträgers bzw. der Verschleißplatten mit unterschiedlicher Rate verschleißen, so daß sich an den Rändern zwischen der Abstellplatte der Kühlbox und dem Transportband dennoch nach wie vor Stufen ausbilden. Bei einem etwaigen Ersatz der Verschleißplatten ist diese Stufenbildung ebenfalls nicht zu vermeiden, da entweder die Oberseite des Transportbandes oder die Oberseite der Abstellplatte über die jeweils andere hervorragt. Dies hat zur Folge, daß aufgrund der ausgebildeten Stufe Hohlglasartikel umkippen, wenn diese von der Abstellplatte der Kühlbox auf das Transportband übergeschoben werden.

Der Erfindung liegt die Aufgabe zugrunde, die gattungsgemäße Vorrichtung zur Kühlung und zum Abtransport von Hohlglasartikeln derart weiterzubilden, daß die Gefahr des Umkippens der von der Abstellplatte der Kühlbox auf das Transportband übergeschobenen Hohlglasartikel beseitigt ist.

Diese Aufgabe wird erfindungsgemäß dadurch gelöst, daß die Kühlbox in bezug auf den Bandträger bzw. das Transportband in Vertikalrichtung verstellbar ist oder umgekehrt. Hierdurch besteht die Möglichkeit, den Höhenunterschied zwischen der Oberfläche der Abstellplatte der Kühlbox und der Oberfläche des auf dem Bandträger bzw. auf den Verschleißplatten laufenden Transportbandes entsprechend dem unterschiedlichen Verschleiß zwischen der Kühlbox bzw. der Abstellplatte und dem Bandträger auszugleichen, so daß der Übergang zwischen der Abstellplatte der Kühlbox und dem Transportband immer stufenlos ausgebildet ist. Hierzu kann das Vertikalniveau der Oberfläche der Abstellplatte der Kühlbox oder der Oberfläche des Transportbandes variiert werden.

Die bisher übliche starre Verbindung zwischen Kühlbox und Bandträger wird durch Führungselemente ersetzt, die zwischen dem Bandträger und der Kühlbox angeordnet sind und deren Gleitflächen in Vertikalrichtung angeordnet sind und aneinander anliegen. Hierdurch sind der Bandträger und damit das Transportband einerseits und die Kühlbox und damit die Abstellplatte andererseits einstellbar miteinander verbunden. Dort, wo sich Bauelemente bzw. Abschnitte, die mit dem Bandträger verbunden bzw. ortsfest zum Bandträger angeordnet sind, und solche Bauteile oder Bauteilabschnitte, die mit der Kühlbox verbunden bzw. ortsfest zur Kühlbox angeordnet sind, in Horizontalrichtung überlagern, sind bewußt Verstellspalte geschaffen, so daß ein Höhenausgleich zwischen der Kühlbox und dem Bandträger um einige Millimeter ermöglicht ist.

In einer vorteilhaften Ausgestaltung der Erfindung ist ein mit dem Bandträger fest verbundenes Führungselement mit einem vorstehenden Vorsprung versehen, der von einer sich in Vertikalrichtung erstreckenden Gewindeausnehmung unterbrochen ist, in die ein an der Kühlbox bzw. der Abstellplatte drehbar angeordneter und betätigbarer Gewindebolzen eingreift. Durch Drehung des Gewindebolzens kann somit die vertikale Relativstellung zwischen dem Bandträger und der Kühlbox - geführt durch die Führungselemente - variiert werden, so daß die Oberfläche der Abstellplatte und die Oberfläche des Transportbandes praktisch immer miteinander fluchten, und zwar unabhängig von dem unterschiedlichen Verschleiß der Oberfläche der Abstellplatte und des Bandträgers. In dieser Form läßt sich die Höhenverstellbarkeit der Kühlbox in bezug auf den Bandträger konstruktiv einfach verwirklichen.

Sofern das Innere des Bandträgers als Luftkanal ausgebildet ist, der durch ein Winkelstück, dessen Strömungsquerschnitt mittels einer Ventilplatte verschließbar ist, an den Innenraum der Kühlbox anschließbar ist und somit zur Zufuhr von Kühlluft in den Innenraum der Kühlbox dient, ist es zweckmäßig, wenn die Ventilplatte, mittels der die Austrittöffnung des Winkelstücks in den Innenraum der Kühlbox verschließbar ist, auf ihrer dem Winkelstück zugewandten Anströmseite einen kegelförmigen Vorsprung aufweist. Im Vergleich zu herkömmlichen Ventilplatten, die beim Anströmen der Kühlluft Wirbelbildungen zur Folge hat, die zu Strömungsverlusten und damit zur Beeinträchtigung der Kühlleistung führen, ergeben sich bei der mit dem kegelförmigen Vorsprung ausgebildeten Ventilplatte optimale Strömungsverhältnisse. Diese entstehen aufgrund des kegelförmigen Vorsprungs bzw. konischen Ansatzes. Vorteilhaft ist die Mantelfläche des Vorsprungs konkav abgerundet, um eine weitere Vergleichmäßigung der Strömungsverhältnisse zu gewährleisten.

Aufgrund der Verstellbarkeit in Höhenrichtung zwischen dem Bandträger und der Kühlbox sind am Übergang zwischen dem Winkelstück und dem Innenraum der Kühlbox Abdichtungsmaßnahmen erforderlich, die dadurch verwirklicht werden, daß zwischen dem Winkelstück und der Kühlbox ein erster O-Ring, der auf der Außenfläche des Winkelstücks angeordnet ist, und ein zweiter O-Ring, der das Winkelstück umgebend auf der Außenfläche der Kühlbox angeordnet ist, vorgesehen sind.

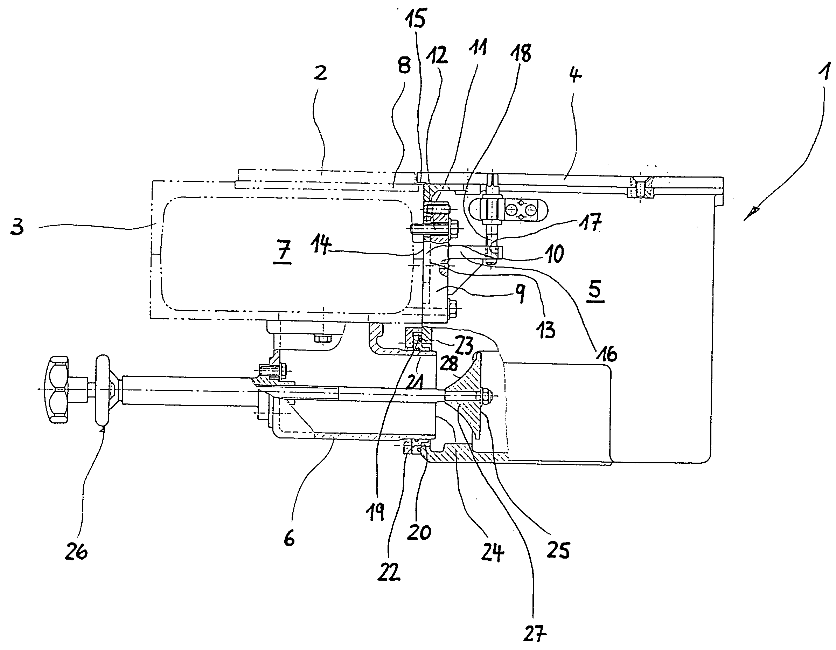

Im folgenden wird die Erfindung an Hand einer Ausführungsform unter Bezugnahme auf die Zeichnung näher erläutert, in der ein Querschnitt durch eine erfindungsgemäß an einem Bandträger angeordnete Kühlbox dargestellt ist.

Eine in der Figur im Querschnitt dargestellte Kühlbox 1 einer erfindungsgemäßen Vorrichtung zur Kühlung und zum Abtransport von Hohlglasartikeln ist zwischen einer in der Figur nicht dargestellten Hohlglasartikel-Fertigungsmaschine und einem ein Transportband 2 lagernden Bandträger 3 angeordnet.

Die Oberseite der Kühlbox 1 wird von einer Abstellplatte 4 gebildet, auf deren Oberfläche die aus der Hohlglasartikel-Fertigungsmaschine stammenden Hohlglasartikel auf das auf dem Bandträger 3 laufende Transportband 2 übergeschoben werden. Bei diesem Überschiebevorgang werden die heißen, unmittelbar aus der Hohlglasartikel-Fertigungsmaschine stammenden Hohlglasartikel in gewünschter Weise abgekühlt.

Die Kühlwirkung erfolgt aufgrund von Kühlluft, die den Innenraum 5 der Kühlbox 1 füllt. Zur Kühlluftversorgung ist der Innenraum 5 der Kühlbox 1 mittels eines Winkelstücks 6 an den Innneraum des Bandträgers 3 angeschlossen, wobei der Innenraum des Bandträgers 3 seinerseits als Kühlluftkanal 7 ausgebildet ist. Durch den an eine Kühlluftquelle, die in der Figur nicht dargestellt ist, angeschlossenen Kühlluftkanal 7 des Bandträgers 3 erfolgt somit eine kontinuierliche Versorgung des Innenraums 5 der Kühlbox 1 mit Kühlluft.

An der Oberseite des Bandträgers 3 ist zwischen dem Bandträger 3 und dem Transportband 2 eine Verschleißplatte 8 angeordnet, so daß der Verschleiß zwischen dem sich relativ zum Bandträger 3 bewegenden Transportband 2 und dem Bandträger 3 an dieser Verschleißplatte 8 auftritt, die vergleichsweise schnell auswechselbar ist.

Der Bandträger 3 ist mit einer Längsaußenseite an einer Außenseite der Kühlbox 1 angebracht. Hierzu hat der Bandträger 3 ein in das Querschnittprofil der Kühlbox 1 vorstehendes Führungselement 9, welches außerhalb der Kühlbox 1 angeordnet ist. Die Kühlbox 1 hat einen entsprechenden Wandvorsprung 10, der zwischen dem bandträgerseitigen Führungselement 9 und der eigentlichen Außenseite des Bandträgers 3 aufgenommen ist.

Zur Anbringung des Bandträgers 3 an der Kühlbox 1 sind Gewindebolzen 11 vorgesehen, die das mit dem Bandträger 3 fest verbundene Führungselement 9, den kühlboxseitigen Wandvorsprung 10 und die entsprechende Außenwand des Wandträgers 3 durchdringen. Hierbei stehen die Gewindebolzen in Gewindeverbindung mit dem Führungselement 9 und der Außenwand des Bandträgers 3. Dahingegen ist in dem den Gewindebolzen 11 umgebenden Bereich des Wandvorsprungs 10 ein Ringspalt 12 vorgesehen, dessen Spaltbreite der maximalen vertikalen Verstellbarkeit zwischen der Kühlbox und dem Bandträger 3 entspricht.

Zwischen dem kühlboxseitigen Wandvorsprung 10 und dem Führungselement 9 bzw. der Außenwand des Bandträgers 3 sind Gleitflächen 13, 14 vorgesehen, die eine exakte Orientierung der Kühlbox 1 in bezug auf den Bandträger 3 auch bei und nach einer vertikalen Verstellung der Kühlbox 1 in bezug auf den Bandträger 3 gewährleisten.

Des weiteren ist zwischen einem Endabschnitt der Abstellplatte 4, der den Bandträger 3 in Horizontalrichtung geringfügig überlagert, und der Oberfläche des Bandträgers 3 ebenfalls ein Verstellspalt 15 vorgesehen.

Das bandträgerseitige Führungselement 9 weist einen Vorsprung 16 auf, der fest mit dem Führungselement 9 verbunden ist und an seinem distalen Ende mit einer Gewindeausnehmung 17 ausgestaltet ist, die den Vorsprung 16 in Vertikalrichtung durchdringt. In diese Gewindeausnehmung 17 greift ein Gewindebolzen 18 ein, der drehbar, in Vertikalrichtung jedoch fixiert, an der Abstellplatte 4 bzw. an der Kühlbox 1 angebracht ist. Durch Drehung des Gewindebolzens 18 kann somit die vertikale Relativstellung zwischen der Kühlbox 1 und damit der Oberfläche der Abstellplatte 4 einerseits und dem Bandträger 3 und damit der Oberfläche des Transportbands 2 variiert werden. Dies erfolgt in einer Weise, so daß die Oberflächen des Transportbands 2 einerseits und der Abstellplatte 4 der Kühlbox 1 andererseits ständig miteinander fluchten. Ein Umkippen von über die Kühlbox 1 auf das Transportband 2 geschobener Hohlglasartikel kann somit zuverlässig vermieden werden.

Aufgrund der Verstellbarkeit in Vertikalrichtung zwischen der Kühlbox 1 und dem Bandträger 3 sind auch am Übergang zwischen dem mit dem Bandträger 3 fest verbundenen Winkelstück 6 und dem Innenraum 5 der Kühlbox 1 Verstellspalte 19, 20 vorgesehen. Aufgrund der somit stattfindenden Relativverstellung zwischen dem Winkelstück 6 und der Kühlbox 1 ist auf der Außenmantelfläche des Winkelstücks 6 ein erster O-Ring 21 angeordnet. Dieser O-Ring sitzt zwischen der Außenmantelfläche des Winkelstücks 6 und der Innenmantelfläche eines Dichtungsteils 22, das zwischen dem Winkelstück 6 und der betreffenden Außenwand der Kühlbox 1 vorgesehen ist. Auf seiner der Außenwand der Kühlbox 1 zugewandten Radialfläche hat das Dichtungsteil 22 einen zweiten O-Ring 23, der zwischen dem Dichtungsteil 22 und der betreffenden Außenwand der Kühlbox 1 abdichtend wirkt. Somit wird die Abdichtung zwischen dem Winkelstück 6 und der Kühlbox 1 auch bei Verstellungen der Kühlbox 1 in bezug auf den Bandträger 3 und damit das Winkelstück 6 aufrecht erhalten.

Die Öffnungsfläche 24 des Winkelstücks 6 in den Innenraum 5 der Kühlbox 1 ist mittels einer Ventilplatte 25 verschließbar. Je nach Kühlluftbedarf innerhalb des Innenraums 5 der Kühlbox 1 kann die Ventilplatte 25 mittels einer Verstellvorrichtung 26 auf der Öffnungsfläche 24 des Winkelstücks 6 versetzt werden.

Auf ihrer dem Winkelstück 6 zugewandten Anströmseite weist die Ventilplatte 25 einen Vorsprung 27 auf, der so ausgestaltet ist, daß die Anströmfläche der Ventilplatte 25 kegelförmig bzw. konisch ausgebildet ist. Des weiteren ist die Mantelfläche 28 des Vorsprungs 27 konkav abgerundet, um eine weitere Vergleichmäßigung der Strömungsverhältnisse am Übergang zwischen dem Winkelstück 6 und dem Innenraum 5 der Kühlbox 1 zu erreichen.

## Patentansprüche

1. Vorrichtung zur Kühlung und zum Abtransport von Hohlglasartikeln, mit einer Kühlbox (1), die zwischen einer Hohlglasartikel-Fertigungsmaschine und einem die Hohlglasartikel abfördernden zur Vorrichtung gehörenden Transportband (2) angeordnet ist, und eine Abstellplatte (4) aufweist, die an der Oberseite der Kühlbox (1) angeordnet ist und über die die fertigen Hohlglasartikel von der Hohlglasartikel-Fertigungsmaschine zum Transportband (2) übergeschoben werden, das auf einem Bandträger (3) läuft, dadurch gekennzeichnet, daß die Kühlbox (1) in bezug auf den Bandträger (3) bzw. das Transportband (2) in Vertikalrichtung verstellbar ist oder umgekehrt.

2. Vorrichtung nach Anspruch 1, bei der zwischen dem Bandträger (3) und der Kühlbox (1) Führungselemente (9, 13, 14) angeordnet sind, deren Gleitflächen (13, 14) in Vertikalrichtung angeordnet sind und aneinander anliegen.

3. Vorrichtung nach Anspruch 2, bei dem ein mit dem Bandträger (3) fest verbundenes Führungselement (9) einen vorstehenden Vorsprung (16) aufweist, der von einer sich in Vertikalrichtung erstreckenden Gewindeausnehmung (17) unterbrochen ist, in die ein an der Kühlbox (1) bzw. der Abstellplatte (4) drehbar angeordneter und betätigbarer Gewindebolzen (18) eingreift.

4. Vorrichtung nach einem der Ansprüche 1 - 3, wobei das Innere des Bandträgers (3) als Kühlluftkanal (7) ausgebildet ist, der durch ein Winkelstück (6), dessen Strömungsquerschnitt mittels einer Ventilplatte (25) verschließbar ist, an den Innenraum (5) der Kühlbox (1) anschließbar ist, und wobei die Ventilplatte (25) auf ihrer Anströmseite einen kegelförmigen Vorsprung (27) aufweist.

5. Vorrichtung nach Anspruch 4, bei der der Vorsprung (27) an seiner Mantelfläche (28) konkav abgerundet ist.

6. Vorrichtung nach Anspruch 4 oder 5, bei der zur Abdichtung am Übergang zwischen dem Winkelstück (6) und der Kühlbox (1) ein erster O-Ring (21), der auf der Außenfläche des Winkelstücks (6) angeordnet ist, und ein zweiter O-Ring (23), der das Winkelstück (6) umgebend auf der Außenfläche der Kühlbox (1) angeordnet ist, vorgesehen sind.

## Claims

1. Apparatus for cooling and removing hollow glass articles, having a cooling box (1) which is arranged between a machine for producing hollow glass articles and a conveyor belt (2) belonging to the apparatus and transporting away the hollow glass articles, and which has a depositing plate (4) which is arranged at the top of the cooling box (1) and by means of which the finished hollow glass articles are pushed from the machine for producing hollow glass articles onto the conveyor belt (2) which runs on a belt carrier (3), characterised in that the cooling box (1) is adjustable in a vertical direction relative to the belt carrier (3) and the conveyor belt (2), or vice versa.

2. Apparatus according to claim 1, wherein there are arranged between the belt carrier (3) and the cooling box (1) guide elements (9, 13, 14) whose sliding faces (13, 14) are arranged in a vertical direction and abut one another.

3. Apparatus according to claim 2, wherein a guide element (9) securely connected to the belt carrier (3) has a protruding projection (16) which is interrupted by a threaded hole (17) extending in a vertical direction, inside which engages a threaded bolt (18) which is actuatable and arranged in a rotatable manner on the cooling box (1) or the receiving plate (4).

4. Apparatus according to any one of claims 1 to 3, wherein the interior of the belt carrier (3) is in the form of a cooling air channel (7) which can be connected to the inner space (5) of the cooling box (1) by an elbow member (6), whose cross-section of flow can be closed by means of a valve plate (25), and the valve plate (25) has a conical projection (27) at its side exposed to flow.

5. Apparatus according to claim 4, wherein the projection (27) is rounded in a concave manner at its outer surface (28).

6. Apparatus according to claim 4 or 5, wherein there are provided for sealing at the transition between the elbow member (6) and the cooling box (1) a first O-ring (21) which is arranged on the outer face of the elbow member (6) and a second O-ring (23) which is arranged on the outer face of the cooling box (1) and surrounds the elbow member (6).

## Revendications

1. Dispositif pour le refroidissement et le transport d'articles en verre creux, comprenant un compartiment de refroidissement (1) qui est disposé entre une machine de fabrication d'articles en verre creux et une bande transporteuse (2) faisant partie du dispositif pour transporter les articles en verre creux, et qui présente un plateau (4) qui est disposé sur la face supérieure du compartiment de refroidissement (1) et par l'intermédiaire duquel les articles en verre creux finis sont transférés de la machine de fabrication d'articles en verre creux sur la bande transporteuse (2) qui se déplace sur un support de bande (3), caractérisé par le fait que le compartiment de refroidissement (1) est réglable dans la direction verticale et inversement par rapport au support de bande (3) ou à la bande transporteuse (2).

2. Dispositif selon la revendication 1, dans lequel des éléments de guidage (9, 13, 14) sont disposés entre le support de bande (3) et le compartiment de refroidissement (1), éléments dont les surfaces de glissement (13, 14) sont orientées dans la direction verticale et sont en contact réciproque.

3. Dispositif selon la revendication 2, dans lequel un élément de guidage (9) solidaire du support de bande (3) présente une saillie (16) qui est traversée par un évidement fileté (17) vertical, dans lequel pénètre une tige filetée (18) montée tournante et actionnable sur le compartiment de refroidissement (1) ou sur le plateau (4).

4. Dispositif selon une des revendications 1 à 3, dans lequel l'intérieur du support de bande (3) est agencé en un canal d'air de refroidissement (7) qui est raccordé à la chambre intérieure (5) du compartiment de refroidissement (1) par un coude (6) dont la section peut être obturée par un plateau de valve (25) et dans lequel le plateau de valve (25) comporte, côté entrée une avancée (27) en forme de cône.

5. Dispositif selon la revendication 4, dans lequel l'avancée (27) présente une surface extérieure avec un arrondi concave.

6. Dispositif selon la revendication 4 ou 5, dans lequel il est prévu, pour réaliser l'étanchéité au niveau du raccordement entre le coude (6) et le compartiment de refroidissement (1), un premier joint torique (21) qui est disposé sur la surface extérieure du coude (6) et un second joint torique (23) entourant le coude (6) qui est disposé sur la surface extérieure du compartiment de refroidissement (1).
